# DEMANDE DE BREVET EUROPEEN

(11) **EP 1 430 771 A1**
(43) Date de publication de la demande: **23.06.2004**
(21) Numéro de dépôt: 03370039.4
(22) Date de dépôt: 16.12.2003
(51) Int. Cl.: A01K 1/01

(54) **Dispositif de réception et de recyclage des excréments animaux**

(30) Priorité: 20.12.2002 FR 0216319
(71) Demandeur: Blanckaert, Pierre, 59216 Sars Poteries (FR)
(72) Inventeur: Blanckaert, Pierre, 59216 Sars Poteries (FR)

(57) **Abrégé**

Dispositif pour permettre aux chiens de déposer leurs déjections. L'invention concerne un dispositif permettant d'une part aux chiens de se placer sur un plancher pour y déposer leurs déjections et d'autre part aux maîtres du chien d'actionner un moteur hydraulique pour évacuer les déjections dans un caisson en même temps que le plancher est nettoyé par des gicleurs par en dessous

Il est constitué d'un caisson (2) d'un totem (9) avec panneau (10) d'un plancher composé de tasseaux (1) en rotation à 3 x 120° sur des couronnes dentées (3) articulées par une chaîne (4) ou en prise directe commandées par un moteur hydraulique (5) et effectue aussi le nettoyage en actionnant une rampe rotative (7) équipée de gicleurs (8) sans pression d'eau depuis l'arrivée (15) additionnée éventuellement d'un bactéricide.

Lors que l'utilisateur actionne le bouton temporisé il actionne le moteur hydraulique (5) et déclenche une quadruple action :
- premièrement le retournement des tasseaux à 120°
- deuxièmement le blocage des tasseaux pour éviter un autre retournement (18)
- troisièmement le cycle de nettoyage rotatif (7)
- quatriémement la disparition des excréments vers le tout à l'égout (12)

Le dispositif selon l'invention est particulièrement destiné à recevoir les chiens pour y déposer leurs déjections ou tout autre animal domestique ou de compagnie.

## Description

La présente invention concerne un dispositif permettant aux animaux de déposer leurs déjections d'une façon hygiénique :

Par exemple, les chiens déposent leurs déjections sur les trottoirs ou dans les rues, ce qui engendre des désagréments, une mauvaise hygiène, un risque d'accidents et une pollution olfactive et visuelle dans la ville.

Le document FR2794613 décrit un dispositif qui comprend une borne de propreté pour animaux relié à l'électricité avec un plateau à lames pivotants à 180°, une face déterminée de la lame étant nettoyée une seule fois lors d'un cycle complet. Ce pivotement à 180° nécessite une qualité de nettoyage en une seule fois dès que la face est positionnée en dessous, ce qui nécessite d'augmenter la pression et le débit, donc la consommation d'eau, ou d'augmenter le temps de nettoyage pour un niveau de salissure donné.

Le dispositif selon l'invention permet de remédier à ces inconvénients.

L'invention concerne un dispositif pour permettre aux animaux de déposer leurs excréments pour le recyclage des déjections comprenant un caisson d'évacuation muni d'un plancher recevant les animaux, ledit caisson comportant un dispositif de nettoyage sous le plancher remarquable en ce que le plancher comporte un arrangement de tasseaux (1) parallèles de section triangulaire équilatérale définissant une surface supérieure plane avec, chacun, leur première face à plat, et pivotant en même temps avec un mouvement de rotation de 120°, les deux autres faces cachées de chaque tasseau, en dessous, étant exposées au dispositif de nettoyage.

Le dispositif permet en outre un nettoyage double du réceptacle, une parfaite stabilité du chien sur le caisson, le mélange de désinfectant bactéricide à chaque manipulation et enfin l'usage par un mécanisme simple et fiable manuel et hydraulique.

Le dispositif de nettoyage est efficace pour au moins quatre raisons :
- il agit en jets rotatifs sous pression hydraulique
- il agit à deux reprises consécutives sur chaque face
- l'eau projetée a un mouvement qui augmente l'efficacité de la pression et donc la qualité de nettoyage
- l'orientation angulaire différente permet d'avoir des angles d'attaque des salissures différents pour une meilleures probabilité de nettoyage

Le dispositif est écologique pour au moins cinq raisons :
- il renvoie les déjections directement dans le circuit du tout à l'égout vers l'épuration et le recyclage sans matière ajoutée
- il interdit tout contact visuel, olfactif ou tactile
- il évite tout gaspillage d'eau en limitant le volume d'utilisation pour le nettoyage
- il permet de traiter le problème des déjections canines en les concentrant en un seul endroit
- il est autonome sans recours à l'électricité pour actionner les tasseaux par le force hydraulique sans risques d'électrocution.

Le dispositif est économique pour au moins trois raisons :
- il utilise une quantité minimale d'eau
- la maintenance est réduite à une surveillance épisodique
- aucune présence n'est nécessaire car le ramassage est automatique et systèmatique.

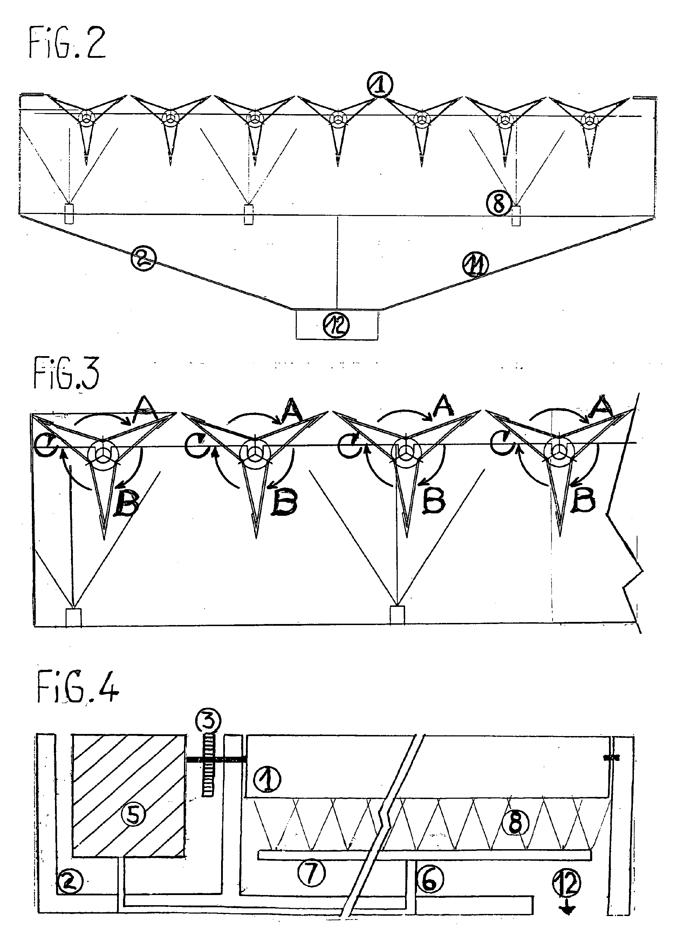

Selon des modes de réalisations particuliers :
- chaque tasseau comprend un profil creux s'étendant longitudinalement sur chaque face pour accompagner et guider les déjections situées dans lesdits profils par gravité dans ledit caisson lors du pivotement des tasseaux.
- ledit profil creux présente une forme en section transversale sensiblement concave de telle sorte que les excréments sont parfaitement engloutis vers le dessous pour être éliminés vers le tout à l'égout (voir figure3)
- La forme concave des côtés équilatéraux de la section triangulaire des Tasseaux facilite l'élimination des excréments. La section de ces tasseaux Forme une étoile à trois branches dont les creux constituent des rainures triangulaires symétriques (Figure 2)
- le dispositif de nettoyage sous les tasseaux comprend une alimentation en eau (6) alimentant sous la pression hydraulique des gicleurs et/ou asperseurs (8) positionnés d'une façon régulière notamment sur deux rampes rotatives alternatives.
- il comprend un mécanisme d'actionnement du système de rotation des tasseaux avec des moyens d'actionnement de pivotement simultané des tasseaux avec la force hydraulique (5) de la pression d'alimentation en eau (6).
- le mécanisme d'actionnement du système de rotation des tasseaux comprend un moteur hydraulique (5) avec une course rotative de trois fois 120° entraînant un axe relié aux tasseaux par des couronnes dentées permettant la rotation simultanée.
- le mécanisme d'actionnement libère une quantité d'eau avec une pression adéquate permettant le nettoyage des faces cachées de chaque tasseau
- le mécanisme d'actionnement libère une dose de nettoyage dans chaque pulsion d'eau sous pression (15) provenant d'une réserve bactéricide.

Le dispositif comporte un plancher, bois, PVC, ou métal constitué de tasseaux(1) de section triangulaire équilatérale. Ces tasseaux sont placés parallèlement de telle sorte qu'ils forment assemblés un plancher plat en face supérieure vue. Les deux autres faces sont cachées dans le caisson.

Chaque tasseau de section triangulaire équilatérale comporte une couronne dentée à sa section. (3)
L' ensemble des tasseaux côte à côte et parallèles pivotent en rotation égale et constante autour de l'axe des couronnes dentées. (3)

Les couronnes dentées sont entraînées entre elles en prise directe et en même temps. C'est l'entraînement horizontal. Il peut se faire par chaîne (4) ou par courroie.

L'usager pourra actionner la rotation du plancher grâce à un robinet temporisé actionnant les tasseaux grâce à un moteur hydraulique. C'est l'entraînement vertical.

Chaque rotation des tasseaux est de 12O°, ce qui à pour effet de produire successivement trois rotations de tous les tasseaux présentant tour à tour leurs trois faces à plat.

Chaque mouvement commandé admet une rotation de 12O° des tasseaux présentant tous en même temps une face parallèle à plat.

A chaque mouvement le robinet temporisé (13) agit sur un clapet qui libère une quantité d'eau suffisante additionnée d'un bactéricide désinfectant, avec une pression adéquate permettant le nettoyage des deux faces cachées dans le caisson.

Les dessins annexés illustrent l'invention :

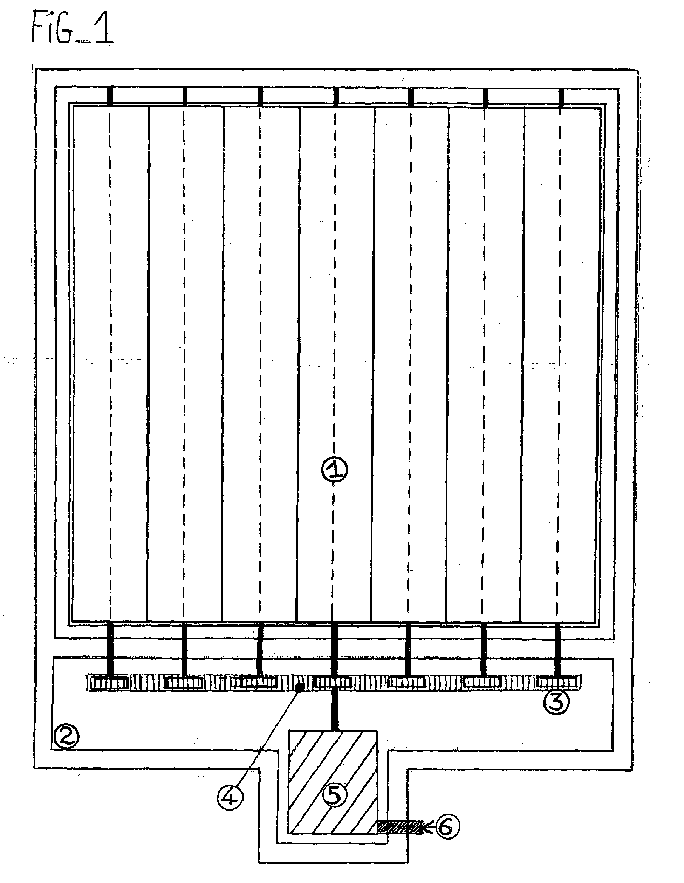

Figure 1 : représente en plan le dispositif de l'invention tel que le chien peut s'y placer pour déposer ses besoins, avec le local technique comportant le moteur hydraulique (5) et le mécanisme (4) d'engrenage (3) et les tasseaux (1)

Figure 2 : représente en coupe le système de nettoyage en dessous avec les jets (8) frappant les deux faces cachées des tasseaux (1) et l'évacuation vers les égouts (12)

Figure 3 : représente en coupe le dispositif de l'invention expliquant les différentes manoeuvres de rotation et le mécanisme. (A,B,C) de rotation à 12O° simultanément et se représentant toujours à plat sur la face supérieure

Figure 4 : représente le dispositif de l'invention en profil montant en ligne le moteur hydraulique (5) l'axe de transmission avec les roues dentées (3) et les tasseaux (1)

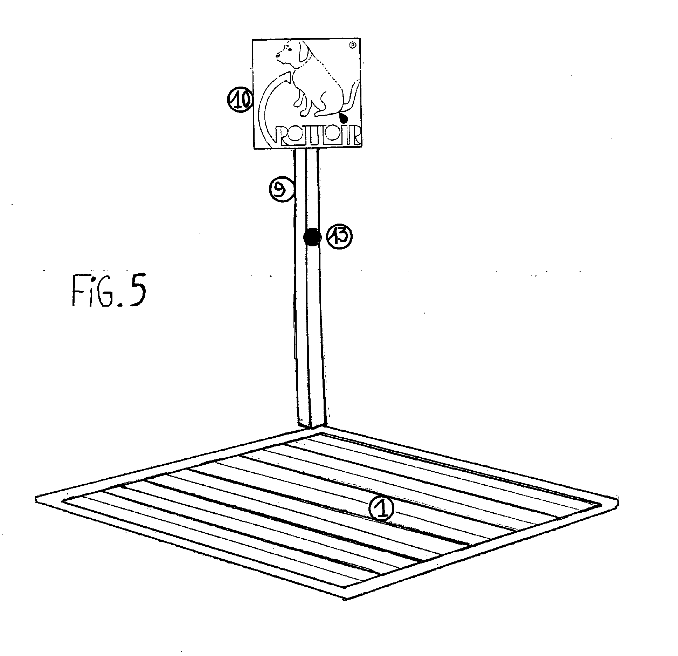

Figure 5 : représente en perspective le dispositif de l'invention tel qu'il se présente à l'arrivée du chien. (Plancher de tasseaux(1) Totem (9) Panneaux (10) Robinet (13)

Figure 6 : représente le schéma de motorisation hydraulique d'actionnement. En référence à ces dessins, le dispositif comporte :

Un caisson (2) dont la partie inférieure est assortie d'une pente (11) couvrant toute la surface du dispositif avec un point bas d'évacuation vers le tout à l'égout(12).

Le dispositif comporte aussi un totem vertical (9) avec un panneau (10) qui signale le dispositif. Le totem porte un robinet temporisé (13) qui actionne le système de rotation (5) ainsi que le mécanisme de nettoyage sous pression d'eau (7).

En situation de pays de gel intense, le robinet temporisé incorporé au totem est Remplacé par une manette qui actionne le robinet temporisé grâce à une tige Relais. Cette solution permet de placer le robinet temporisé sous le sol avec Une isolation contre le froid.

Le dispositif comporte au niveau du sol, un plancher disposé à la surface du caisson. Le caisson est entèrré.

Le plancher est constitué d'un nombre défini d'éléments appelés tasseaux (1) de section triangulaire équilatérale dont l'assemblage présente une surface sensiblement plane et ondulante du fait des côtés concaves.

Chaque tasseau reçoit une couronne dentée (2). L'ensemble est entraîné en rotation par une chaîne (4) ou une courroie, ou un train d'engrenages.

L'ensemble de ce mouvement horizontal est entraîné par des engrenages (3) reliés entre eux par des engrenages intermédiaires et actionnés par le moteur hydraulique situé dans le sol.

Le dispositif comprend aussi à l'intérieur du caisson (2) un système de nettoyage situé directement sous les tasseaux (1) du plancher comportant une alimentaiton (6), un rotor ou rampe sur pivot (7) qui distribue des gicleurs ou asperseurs (8) actionnés sous pression aussi nombreux que de besoin.

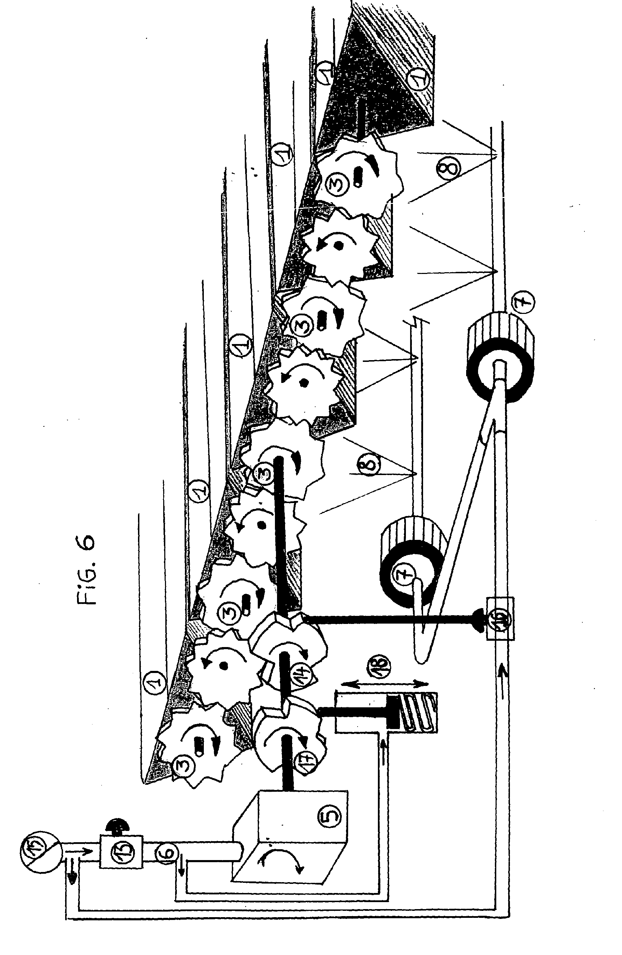

Le dispositif de mécanisme hydraulique, selon la figure 6 comprend une arrivée d'eau de la ville sous pression (15)

Ce dispositif est actionné par un robinet temporisé (13) qui déclenche :
- en premier lieu la rotation du moteur hydraulique (5)
- en second lieu le retournement à 12O° des tasseaux (1)
- en troisième lieu et seulement après que les tasseaux se soient retournés, le système rotatif de nettoyage (7) des deux faces non visibles des tasseaux triangulaires (1)

Pour actionner le nettoyage (7) une came (14) fixée sur l'axe du moteur hydraulique (5) déclenche un robinet temporisé (16) qui permet d'activer le circuit de nettoyage seulement après le retournement des tasseaux (1)

Pour assurer la position des tasseaux (1) alignés en un plancher pouvant recevoir les chiens, le dispositif comporte une came (17) elle-même fixée sur l'axe du moteur hydraulique (5) qui actionne un ressort (18) dont le rôle est de pousser un pointeau qui n'autorise qu'un seul tiers de tour (12O°) aux tasseaux (1)

Ce moteur hydraulique (5) est constitué d'un carter muni d'un couvercle qui assure l'étanchéité. Le carter emprisonne par exemple huit engrenages doubles 56/13 jumelés par quatre sur deux axes métalliques. Le premier engrenage est une roue à turbine dont les pâles sont actionnées directement par l'arrivée d'eau de ville sous pression. Cette eau est l'énergie du moteur hydraulique qui transmet et à la fois le mouvement de rotation des tasseaux transmis par l'axe du moteur, et consécutivement l'action de nettoyage des tasseaux après retournement simultané.

## Revendications

1. Dispositif pour permettre aux animaux de déposer leurs excréments pour le recyclage des déjections comprenant un caisson d'évacuation muni d'un plancher recevant les animaux, ledit caisson comportant un dispositif de nettoyage sous le plancher **caractérisé en ce que** le plancher comporte un arrangement de tasseaux (1) parallèles de section transversale triangulaire équilatérale définissant une surface supérieure plane ou sensiblement plane ondulante et pivotant simultanément avec un mouvement de rotation à 120° pendant que les deux autres faces cachées de chaque tasseau sont exposées par en dessous, deux fois consécutivement avec réapparition, au dispositif de nettoyage.

2. Dispositif selon la revendication 1 **caractérisé en ce que** chaque tasseau comprend un profil de section transversale creux s'étendant longitudinalement sur chaque face pour accompagner et guider les déjections situées dans lesdits profils par gravité dans ledit caisson lors du pivotement des tasseaux à 120°

3. Dispositif selon la revendication 2 **caractérisé en ce que** ledit profil creux présente une forme en section transversale sensiblement concave, cette section transversale concave donnant la particularité de présenter l'aspect d'une étoile à trois branches dont les angles sont arrondis, qui permet de mieux accompagner et guider les déjections par gravité lors du retournement des tasseaux simultanément, dans le caisson.

4. Dispositif selon l'une quelconque des revendications précèdentes **caractérisé en ce que** le dispositif de nettoyage sous les tasseaux comprend une alimentation en eaux (6) alimentant sous la pression hydraulique des gicleurs et/ou asperseurs (8) positionnés d'une façon régulière notamment sur au moins une rampe rotative oscillante permettant une efficacité optimale de l'action de nettoyage grâce au mouvement de l'eau.

5. Dispositif selon l'une quelconque des revendications précèdentes **caractérisé en ce qu'**il comprend un mécanisme d'actionnement du système de rotation des tasseaux avec des moyens d'actionnement de pivotement simultané des tasseaux avec la force hydraulique de la pression d'alimentation en eau (6) grâce à un moteur hydraulique (5) composé de couronnes dentées démultipliant la force initiale.

6. Dispositif selon la revendication 5 **caractérisé en ce que** le mécanisme d'actionnement du système de rotation des tasseaux comprend un robinet temporisé actionnant ledit moteur hydraulique (5) entraînant les tasseaux (1), par un mouvement de rotation de 12O° simultanément, en prise directe grâce aux couronnes dentées.

7. Dispositif selon la revendication 5 ou 6 **caractérisé en ce que** le mécanisme d'actionnement libère une quantité d'eau avec une pression adéquate permettant le nettoyage des faces cachées de chaque tasseau dans un temps prédéterminé.

8. Dispositif selon l'une quelconque des revendications 5 à 7 **caractérisé en ce que** le mécanisme d'actionnement libère une dose de nettoyage dans chaque pulsion d'eau sous pression (15) provenant d'une réserve.

9. Dispositif selon l'une quelconque des revendications 5 à 8 **caractérisé en ce que** le mécanisme d'actionnement libère une dose de substances incitatives pour attirer les animaux, dans chaque pulsion d'eau sous pression (15).

10. Dispositif selon l'une quelconque des revendications précédentes **caractérisé en ce qu'**il comprend des moyens de sécurité de blocage pour bloquer horizontalement les tasseaux du plancher après la fin du mouvement de rotation de 120°
